# EUROPEAN PATENT SPECIFICATION

(11) **EP 3 487 173 B1**
(45) Date of publication and mention of the grant of the patent: **25.11.2020**
(21) Application number: 17886319.7
(22) Date of filing: 03.10.2017
(51) Int. Cl.: G06T 7/73, H04N 7/18, B60R 1/00

(54) **IMAGE GENERATION DEVICE, IMAGE GENERATION SYSTEM, IMAGE GENERATION METHOD AND PROGRAM**
BILDERZEUGUNGSVORRICHTUNG, BILDERZEUGUNGSSYSTEM, BILDERZEUGUNGSVERFAHREN UND PROGRAMM
DISPOSITIF DE GÉNÉRATION D'IMAGE, SYSTÈME DE GÉNÉRATION D'IMAGE ET PROCÉDÉ DE GÉNÉRATION D'IMAGE ET PROGRAMME

(30) Priority: 28.12.2016 JP 2016256582
(43) Date of publication of application: 22.05.2019
(73) Proprietor: JVC Kenwood Corporation, Yokohama-shi, Kanagawa 221-0022 (JP)
(72) Inventor: YAMADA, Yasuo, Yokohama-shi Kanagawa 221-0022 (JP); MURATA, Toshitaka, Yokohama-shi Kanagawa 221-0022 (JP); HAYASHI, Keita, Yokohama-shi Kanagawa 221-0022 (JP)
(74) Representative: Wagner & Geyer
(86) International application number: PCT/JP2017/035987
(87) International publication number: WO 2018/123185

(56) References cited:
- EP-A1- 2 547 104
- JP-A- 2006 103 526
- JP-A- 2007 282 060
- JP-A- 2008 141 649
- JP-A- 2011 113 292
- JP-A- 2011 113 292
- US-A1- 2006 187 304
- US-B2- 8 294 563

## Description

### Field

The present invention relates to a video generation device, a video generation system, a video generation method, and a program.

### Background

A technology related to a surroundings-of-vehicle display device that displays a bird's-eye view video of a vehicle to improve visibility around the vehicle has been known (for example, see JP 2010-042728 A).

EP 2 547 104 A discloses an apparatus including a camera which captures an image of the vicinity of the vehicle door, a monitor capable of displaying the image captured by the camera and a door opening detection sensor which detects an open state of the vehicle door. The monitor displays the image captured by the camera when the door opening detection sensor detects an open state of the door.

JP 2006 103526 A discloses a vehicle including a plurality of doors, cameras respectively provided at one end of the plurality of the doors, and on-vehicle equipment connected to the cameras. In the on-vehicle equipment, it is determined whether all of the cameras output pickup data or not. If an area keeping the pickup data is determined as an area A and an area C, the pickup data from the camera provided on a door at a right and rear side of the vehicle is processed to image data by taking higher priority than the pickup date from the camera provided on a door in a right and front door of the vehicle.

US 2011 025489 A discloses a vehicle-surrounding image display apparatus and a vehicle-surrounding image display method.

### Summary

### Technical Problem

In the technology of displaying the bird's-eye view video as described above, an adjustment is performed to accurately generate a bird's-eye view video based on the condition that an imaging direction of an imaging device that captures a video of surroundings of the vehicle is set along a predetermined direction. Therefore, when a positional relationship of the imaging device is changed, a bird's-eye view video is not accurately generated and connecting portions between videos become discontinuous. With the bird's-eye view video in which the discontinuity occurs as described above, it may be difficult for a driver of the vehicle to appropriately check surroundings of the vehicle.

The present invention has been conceived in view of the foregoing situations, and an object is to provide a video generation device, a video generation system, a video generation method, and a program capable of appropriately check an obstacle around a vehicle.

### Solution to Problem

In accordance with the present invention, a video generation device, method and a program as set forth in the appended claims is provided. In particular, to solve the above problem and achieve the object, a video generation device according to the present invention includes a video acquiring unit that is arranged on a vehicle and is configured to acquire videos that are captured by a plurality of imaging devices, at least one of the imaging devices being mounted on a movable part that is movable with respect to a body of the vehicle, an information acquiring unit configured to acquire detection information indicating that movement of the movable part is detected,
a video generating unit configured to generate a synthesized video by synthesizing the videos that are captured by the plurality of imaging devices and are acquired by the video acquiring unit, and a display control unit configured to display the synthesized video generated by the video generating unit on a display unit. When the information acquiring unit acquires the detection information indicating that the movement of the movable part is detected, the video generating unit generates a synthesized image by changing, in accordance with the detected movement, orientation of a video that is captured by the imaging device mounted on the movable part in which the movement is detected.

A video generation system according to the present invention includes the above video generation device, an imaging device configured to capture a video of surroundings of the vehicle and supply a surroundings video to the video acquiring unit, and a detecting unit configured to detect movement of the movable part and supply detection information to the information acquiring unit.

A video generation method according to the present invention includes a video acquiring step on a vehicle of acquiring videos that are captured by a plurality of imaging devices, at least one of the imaging devices being mounted on a movable part that is movable with respect to a body of the vehicle, an information acquiring step of acquiring detection information indicating that movement of the movable part is detected, a video generating step of generating a synthesized video by synthesizing the videos that are captured by the plurality of imaging devices and are acquired by the video acquiring unit, and a display control step of displaying the synthesized video generated by the video generating unit on a display unit. When the detection information indicating that the movement of the movable part is detected is acquired at the information acquiring step, the video generating step includes generating a synthesized image by changing, in accordance with the detected operation, orientation of a video that is captured by the imaging device mounted on the movable part in which the movement is detected.

A program according to the present invention causes a computer that functions as a video generation device to execute a video acquiring step on a vehicle of acquiring videos that are captured by a plurality of imaging devices, at least one of the imaging devices being mounted on a movable part that is movable with respect to a body of the vehicle, an information acquiring step of acquiring detection information indicating that movement of the movable part is detected, a video generating step of generating a synthesized video by synthesizing the videos that are captured by the plurality of imaging devices and are acquired by the video acquiring unit, and a display control step of displaying the synthesized video generated by the video generating unit on a display unit. When the detection information indicating that the movement of the movable part is detected is acquired at the information acquiring step, the video generating step includes generating a synthesized image by changing, in accordance with the detected operation, orientation of a video that is captured by the imaging device mounted on the movable part in which the movement is detected.

### Advantageous Effects of Invention

According to the present invention, it is possible to appropriately check surroundings of a vehicle.

### Brief Description of Drawings

FIG. 1 is a schematic diagram illustrating a vehicle mounted with a video generation system according to a first embodiment.
FIG. 2 is a block diagram illustrating a video generation system according to the first embodiment.
FIG. 3 is a diagram illustrating an example of a bird's-eye view video generated by the video generation system according to the first embodiment.
FIG. 4 is a diagram illustrating another example of the bird's-eye view video generated by the video generation system according to the first embodiment.
FIG. 5 is a flowchart illustrating the flow of processes performed by a bird's-eye view video generation device of the video generation system according to the first embodiment.
FIG. 6 is a block diagram illustrating a video generation system according to a second embodiment.
FIG. 7 is a diagram illustrating an example of a bird's-eye view video generated by the video generation system according to the second embodiment.
FIG. 8 is a flowchart illustrating the flow of processes performed by a bird's-eye view video generation device of the video generation system according to the second embodiment.
FIG. 9 is a diagram illustrating an example of a bird's-eye view video generated by a video generation system according to a third embodiment.
FIG. 10 is a diagram illustrating another example of a bird's-eye view video generated by the video generation system according to the third embodiment.
FIG. 11 is a diagram illustrating another example of the bird's-eye view video generated by the video generation system according to the third embodiment.
FIG. 12 is a diagram illustrating still another example of the bird's-eye view video generated by the video generation system according to the third embodiment.
FIG. 13 is a diagram illustrating still another example of the bird's-eye view video generated by the video generation system according to the third embodiment.
FIG. 14 is a diagram illustrating an example of a bird's-eye view video generated by a video generation system according to a fourth embodiment.
FIG. 15 is a diagram illustrating an example of a bird's-eye view video generated by a video generation system according to a fifth embodiment.
FIG. 16 is a diagram illustrating an example of a bird's-eye view video generated by a video generation system according to a sixth embodiment.
FIG. 17 is a schematic diagram illustrating a vehicle mounted with a video generation system according to a seventh embodiment.
FIG. 18 is a flowchart illustrating the flow of processes performed by a bird's-eye view video generation device of the video generation system according to the seventh embodiment.

### Description of Embodiments

Embodiments of a bird's-eye view video generation device (video generation device) 40, a video generation system 1, a video generation method, and a program according to the present invention will be described below with reference to the accompanying drawings. The present invention is not limited by the embodiments below.

### [First Embodiment]

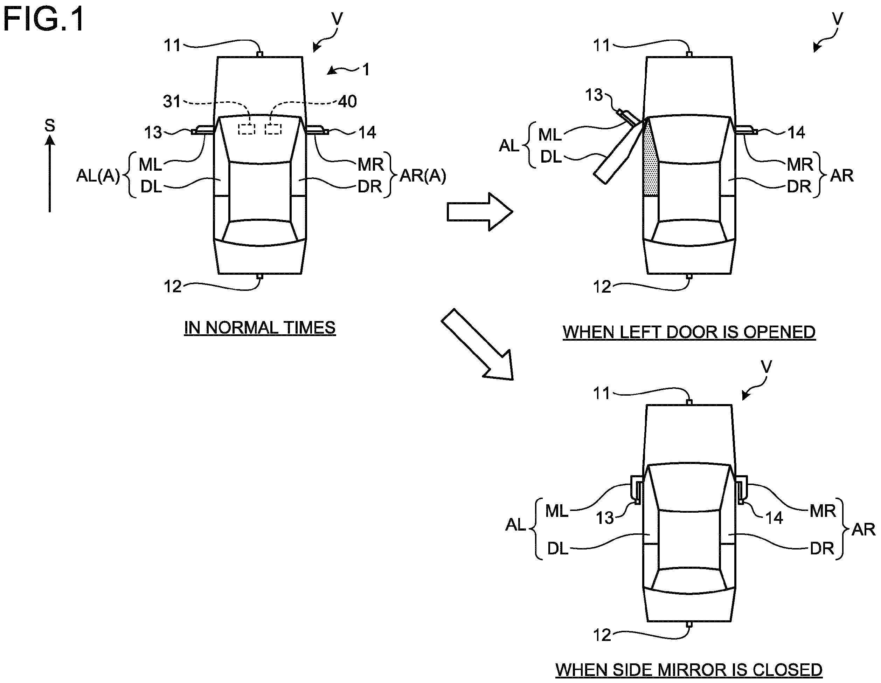

An outline of a vehicle V mounted with the video generation system 1 will be described with reference to FIG. 1. FIG. 1 is a schematic diagram illustrating the vehicle mounted with the video generation system according to the first embodiment. The vehicle V includes, as movable parts A, a left movable part AL including a left door DL and a left side mirror ML, and a right movable part AR including a right door DR and a right side mirror MR. In the following description, the left movable part AL and the right movable part AR may be referred to as the movable parts A when they need not be distinguished from each other. In the following description, it is assumed that opening operation is performed on the left door DL of the left movable part AL.

In the vehicle V, the left side mirror ML for viewing the left side of the vehicle V is arranged on the left door DL. The left door DL is arranged on a left side of the body when facing forward in a moving direction of the vehicle V. The left door DL is openable and closable with respect to the body of the vehicle V. The left side mirror ML is openable and closable with respect to the left door DL. The left side mirror ML is movable with respect to the body of the vehicle V along with operation of opening and closing the left door DL. Further, the left side mirror ML itself is opened and closed with respect to the left door DL. Therefore, even when the left door DL is not opened and closed, the left side mirror ML is movable with respect to the body of the vehicle V and with respect to the left door DL. In this manner, the left door DL and the left side mirror ML are movable, as the left movable part AL, with respect to the body of the vehicle V.

In the vehicle V, the right side mirror MR for viewing the right side of the vehicle V is arranged on the right door DR. The right door DR is arranged on a right side of the body when facing forward in the moving direction of the vehicle V. The right door DR is openable and closable with respect to the body of the vehicle V. The right side mirror MR is openable and closable with respect to the right door DR. The right side mirror MR is movable with respect to the body of the vehicle V along with operation of opening and closing the right door DR. Further, the right side mirror MR itself is opened and closed with respect to the right door DR. Therefore, even when the right door DR is not opened and closed, the right side mirror MR is movable with respect to the body of the vehicle V and with respect to the right door DR. In this manner, the right door DR and the right side mirror MR are movable, as the right movable part AR, with respect to the body of the vehicle V.

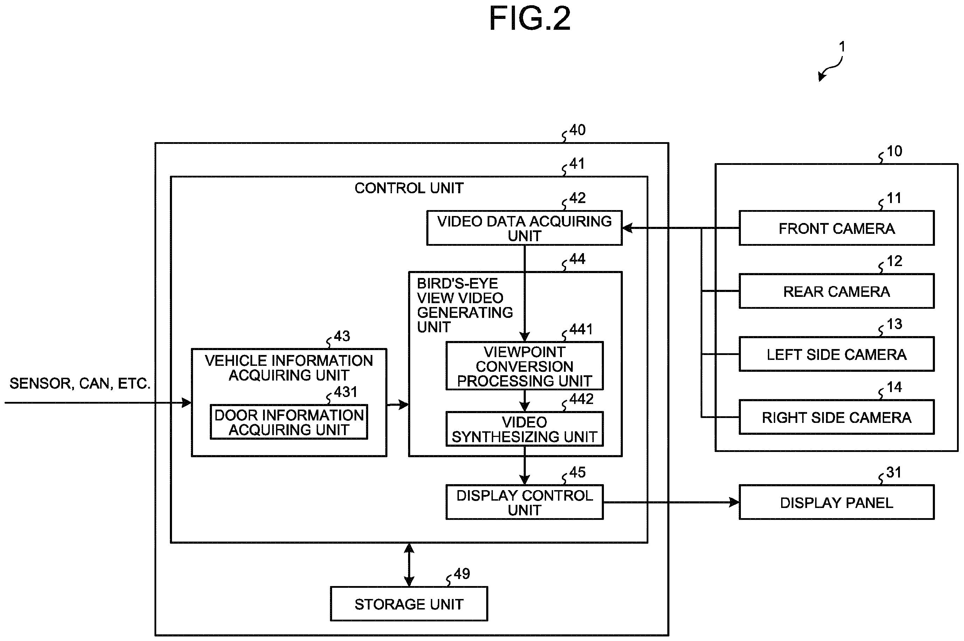

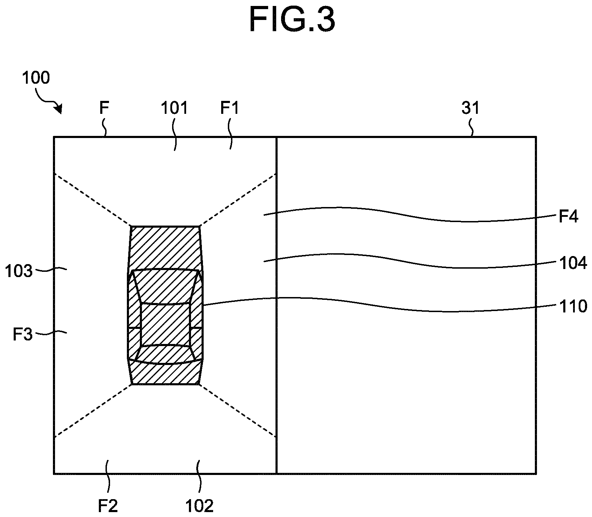

The video generation system 1 will be described with reference to FIG. 2. FIG. 2 is a block diagram illustrating the video generation system according to the first embodiment. The video generation system 1 generates a bird's-eye view video 100 of the vehicle V (see FIG. 3). The bird's-eye view video generation device 40 and the video generation system 1 are mounted on the vehicle V. The bird's-eye view video generation device 40 and the video generation system 1 are not limited to devices mounted on the vehicle V, but may be devices portable and usable in the vehicle V.

The video generation system 1 includes a front camera (imaging device) 11, a rear camera (imaging device) 12, a left side camera (imaging device) 13, a right side camera (imaging device) 14, a display panel (display unit) 31, and the bird's-eye view video generation device 40.

The front camera 11 is arranged on the front of the vehicle V and captures a video of surroundings around the front of the vehicle V. The front camera 11 outputs video data of a captured surroundings video (hereinafter, referred to as "surroundings video data") to a video acquiring unit 42 of the bird's-eye view video generation device 40.

The rear camera 12 is arranged on the rear of the vehicle V and captures a video of surroundings around the rear of the vehicle V. The rear camera 12 outputs captured surroundings video data to the video acquiring unit 42 of the bird's-eye view video generation device 40.

The left side camera 13 is arranged on the left side of the vehicle V and captures a video of surroundings around the left side of the vehicle V. The left side camera 13 is arranged on the left movable part AL. In the present embodiment, the left side camera 13 is mounted on and fixed to the left side mirror ML. The left side camera 13 may be mounted on the left door DL. The left side camera 13 is movable with respect to the body of the vehicle V in accordance with operation of the left movable part AL. An imaging direction of the left side camera 13 changes with operation of the left movable part AL. The left side camera 13 outputs captured surroundings video data to the video acquiring unit 42 of the bird's-eye view video generation device 40.

The right side camera 14 is arranged on the right side of the vehicle V and captures a video of surroundings around the right side of the vehicle V. The right side camera 14 is arranged on the right movable part AR. In the present embodiment, the right side camera 14 is mounted on and fixed to the right side mirror MR. The right side camera 14 may be mounted on the right door DR. The right side camera 14 is movable with respect to the body of the vehicle V in accordance with operation of the right movable part AR. An imaging direction of the right side camera 14 changes with operation of the right movable part AR. The right side camera 14 outputs captured surroundings video data to the video acquiring unit 42 of the bird's-eye view video generation device 40.

An imaging unit 10 includes the front camera 11, the rear camera 12, the left side camera 13, and the right side camera 14 and captures videos in all directions around the vehicle V.

The display panel 31 is, for example, a display including a liquid crystal display (LCD), an organic electro-luminescence (EL) display, or a head-up display. The display panel 31 displays a video based on a video signal output from the bird's-eye view video generation device 40 of the video generation system 1. The display panel 31 may be dedicated to the video generation system 1 or shared with other systems including a navigation system, for example. The display panel 31 is arranged at a position easily viewable by a driver of the vehicle.

The bird's-eye view video generation device 40 includes a control unit 41 and a storage unit 49.

The control unit 41 is an arithmetic processing device configured with a central processing unit (CPU) or the like, for example. The control unit 41 loads a program stored in the storage unit 49 onto a memory and executes commands contained in the program. The control unit 41 includes the video acquiring unit 42, a vehicle information acquiring unit (information acquiring unit) 43, a bird's-eye view video generating unit (video generating unit) 44, and a display control unit 45.

The video acquiring unit 42 acquires surroundings video data that is obtained by capturing a video of surroundings of the vehicle V. More specifically, the video acquiring unit 42 acquires surroundings video data output by the imaging unit 10. The video acquiring unit 42 outputs the acquired surroundings video data to the bird's-eye view video generating unit 44.

The vehicle information acquiring unit 43 acquires vehicle information, which includes information, such as gear operation information on the vehicle V, to be used as a trigger to display the bird's-eye view video 100 and operation information (detection information) on the movable parts A, from a controller area network (CAN), various sensors that sense situations of the vehicle V, or the like. The vehicle information acquiring unit 43 outputs the acquired vehicle information to the bird's-eye view video generating unit 44. The vehicle information acquiring unit 43 includes a door information acquiring unit 431.

The door information acquiring unit 431 acquires door open/close information as the operation information on the movable parts A. The door open/close information indicates whether either the left door DL or the right door DR is in an opened state or a closed state. Further, the door information acquiring unit 431 acquires, as the operation information on the movable parts A, open level information on the left door DL or the right door DR. The open level of the door of the vehicle V is a position at which the door is suspended in the opened state in a two-step manner or three-step manner with the aid of a cam mechanism at a hinge of the door.

The bird's-eye view video generating unit 44 generates the bird's-eye view video 100, in which the vehicle V is looked down from above, by performing viewpoint conversion on the surroundings video data acquired from the video acquiring unit 42. The bird's-eye view video generating unit 44 includes a viewpoint conversion processing unit 441 and a video synthesizing unit 442. The bird's-eye view video generating unit 44 outputs a video signal for displaying the generated bird's-eye view video 100 to the display control unit 45.

The viewpoint conversion processing unit 441 performs, on the surroundings video data acquired by the video acquiring unit 42, a viewpoint conversion process such that the vehicle V is looked down from above. More specifically, the viewpoint conversion processing unit 441 generates a video by performing the viewpoint conversion process based on the surroundings video data captured by the imaging unit 10. Any well-known method may be adopted as a method of the viewpoint conversion process and the method is not limited. The viewpoint conversion processing unit 441 may store the surroundings video data subjected to the viewpoint conversion process in the storage unit 49.

The video synthesizing unit 442 generates the bird's-eye view video 100 by clipping a predetermined clipping region of the surroundings video data that has been subjected to the viewpoint conversion process in the viewpoint conversion processing unit 441, and synthesizing the clipped video data.

When the doors are closed, the video synthesizing unit 442 generates the normal bird's-eye view video 100 by clipping a first clipping region from the surroundings video data subjected to the viewpoint conversion process.

The normal bird's-eye view video 100 will be described with reference to FIG. 3. FIG. 3 is a diagram illustrating an example of the bird's-eye view video generated by the video generation system according to the first embodiment. The bird's-eye view video 100 contains a front video 101, a rear video 102, a left side video 103, a right side video 104, and a subject vehicle icon 110 that is located in a central portion surrounded by the front video 101, the rear video 102, the left side video 103, and the right side video 104. The front video 101, the rear video 102, the left side video 103, the right side video 104, and the subject vehicle icon 110 may be segmented by frame borders.

The bird's-eye view video 100 is generated within a frame F that is a display region having a vertically-long rectangular shape. The frame F contains a first frame F1 for displaying the front video 101, a second frame F2 for displaying the rear video 102, a third frame F3 for displaying the left side video 103, and a fourth frame F4 for displaying the right side video 104.

In FIG. 3, diagonal dashed lines indicating borders between the front video 101, the rear video 102, the left side video 103, and the right side video 104 are illustrated for convenience of explanation; however, it does not matter whether or not the dashed lines, the solid lines or the like are displayed in the bird's-eye view video 100 that is actually displayed on the display panel 31, and thus they are not displayed in some cases. Further, it may be possible to perform a process of blurring the borders between the front video 101, the rear video 102, the left side video 103, and the right side video 104, for example by overlapping adjacent portions of the adjacent videos. The same applies to the other drawings.

When the vehicle information acquiring unit 43 acquires operation information indicating that movement of the movable part A is detected, the video synthesizing unit 442 generates a bird's-eye view video 100A by changing, in accordance with a direction in which the door is opened, orientation of a video that is captured by the camera mounted on the movable part A in which the movement is detected. More specifically, when the door is opened, the video synthesizing unit 442 clips the first clipping region from the surroundings video data subjected to the viewpoint conversion process. Then, the video synthesizing unit 442 generates the bird's-eye view video 100A by synthesizing a front video 101A, a rear video 102A, and either a left side video 103A or a right side video 104A that is obtained by performing, in accordance with a direction in which the door is opened, viewpoint conversion on a video corresponding to the direction in which door opening operation is performed. In the present embodiment, the video synthesizing unit 442 generates the bird's-eye view video 100A by synthesizing the front video 101A, the rear video 102A, the right side video 104A, and the left side video 103A that is obtained by performing, in accordance with a direction in which the left door DL is opened, viewpoint conversion on the left side video 103 corresponding to the left side on which the door opening operation is performed.

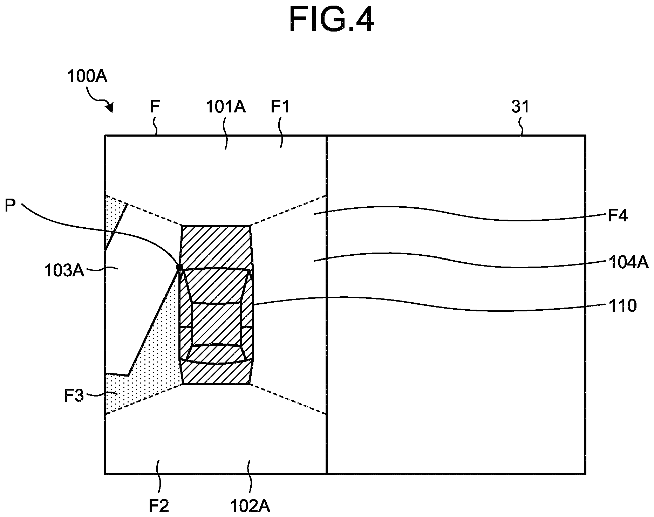

The bird's-eye view video 100A will be described with reference to FIG. 4. FIG. 4 is a diagram illustrating another example of the bird's-eye view video generated by the video generation system according to the first embodiment. The bird's-eye view video 100A contains the front video 101A, the rear video 102A, and the right side video 104A that are the same as those of the normal bird's-eye view video 100, and contains the left side video 103A. The left side video 103A is a video that is obtained by performing viewpoint conversion on the surroundings video data captured by the left side camera 13, in accordance with a change in the position and the direction of the left side camera 13 due to opening of the left door DL. In other words, the left side video 103A is a video that is obtained by rotating the left side video 103 in a clockwise direction by a predetermined angle about a point P, in accordance with a change in the imaging direction of the left side camera 13. The point P is a position corresponding to the mounting position of the left side mirror ML of the subject vehicle icon 110. The left side video 103A is rotated within the third frame F3. A monochrome video is displayed in a region in which the left side video 103A is not displayed within the third frame F3. The door opening operation of the vehicle V and rotation of the video are performed when a rotation axis is perpendicular to or approximately perpendicular to the ground.

The display control unit 45 displays the bird's-eye view video 100 or the bird's-eye view video 100A generated by the bird's-eye view video generating unit 44 on the display panel 31.

The storage unit 49 stores therein data needed for various processes performed by the bird's-eye view video generation device 40 and various processing results. The storage unit 49 is a semiconductor memory device, such as a random access memory (RAM), a read only memory (ROM), or a flash memory, or a storage device, such as a hard disk or an optical disk.

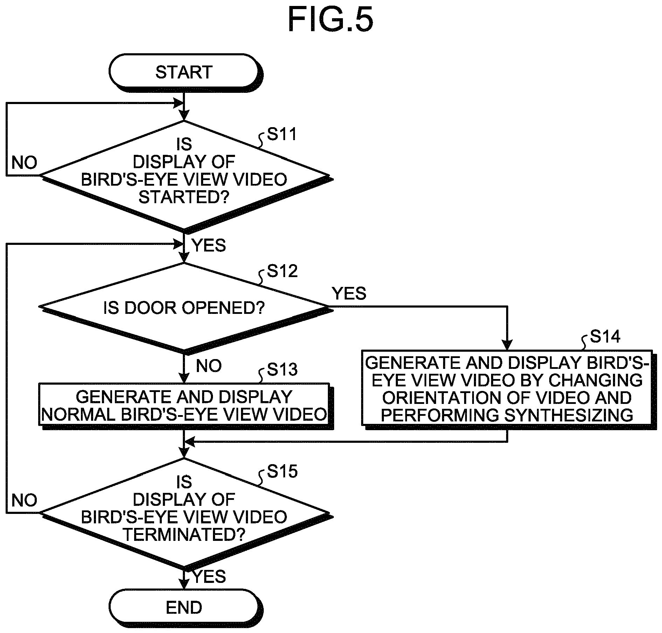

Next, the flow of processes performed by the bird's-eye view video generation device 40 of the video generation system 1 will be described with reference to FIG. 5. FIG. 5 is a flowchart illustrating the flow of processes performed by the bird's-eye view video generation device of the video generation system according to the first embodiment.

The control unit 41 determines whether to start displaying a bird's-eye view video (Step S11). As an example of determination to start displaying the bird's-eye view video, the control unit 41 determines whether to start displaying the bird's-eye view video based on presence or absence of a reverse trigger. The reverse trigger refers to, for example, a change of the shift position to the "reverse" position. Further, the reverse trigger refers to a change of a moving direction of the vehicle V to the rearward direction of a front-back direction with respect to the vehicle V. If the reverse trigger is absent, the control unit 41 determines not to start displaying a bird's-eye view video (NO at Step S11), and performs the process at Step S11 again. If the reverse trigger is present, the control unit 41 determines to start displaying a bird's-eye view video (YES at Step S11), and proceeds to Step S12.

The control unit 41 determines whether the door is opened (Step S12). The control unit 41 determines whether the left door DL or the right door DR is opened based on the vehicle information acquired by the vehicle information acquiring unit 43. If the left door DL or the right door DR is not opened (NO at Step S12), the control unit 41 proceeds to Step S13. If the left door DL or the right door DR is opened (YES at Step S12), the control unit 41 proceeds to Step S14.

After the bird's-eye view video illustrated in FIG. 3 is displayed based on the reverse trigger at Step S11, it may be possible to additionally determine whether the vehicle V is stopped to ensure the validity of the determination at Step S12. This is because, in most cases, the door of the vehicle V is opened while the vehicle is stopped. Therefore, when display of the bird's-eye view video is started due to the reverse trigger at Step S11, and even when the vehicle is stopped after the reverse movement and then the shift position is changed from reverse to parking, neutral or the like, display of the bird's-eye view video is continued instead of being terminated.

Further, as another example of determination to start displaying the bird's-eye view video at Step S11, it is possible to apply various conditions under which the door of the vehicle V may be opened, such as a condition that operation of displaying a bird's-eye view video is started by the user's operation while the vehicle V is stopped or a condition that door opening operation on the vehicle V is detected while the vehicle V is stopped. Furthermore, it is not necessary to apply the condition that the vehicle V is stopped, and it may be possible to additionally apply a condition that the door of the vehicle V is opened while the vehicle V is running at a low speed.

The control unit 41 generates and displays the normal bird's-eye view video 100 (Step S13). More specifically, the control unit 41 causes the viewpoint conversion processing unit 441 to generate a video, in which the vehicle V is looked down from above, by performing viewpoint conversion on the surroundings video data acquired by the video acquiring unit 42. Then, the control unit 41 causes the video synthesizing unit 442 to generate the normal bird's-eye view video 100 by clipping the first clipping region from the surroundings video data subjected to the viewpoint conversion process. Then, the control unit 41 causes the display control unit 45 to display the generated bird's-eye view video 100 on the display panel 31.

The control unit 41 generates and displays the bird's-eye view video 100A by changing orientation of a video and performing synthesizing (Step S14). More specifically, the control unit 41 causes the viewpoint conversion processing unit 441 to generate a video, in which the vehicle is looked down from above, by performing viewpoint conversion on the surroundings video data acquired by the video acquiring unit 42. The viewpoint conversion processing unit 441 generates a video by performing, in accordance with the direction in which the door is opened, viewpoint conversion on a video corresponding to the direction in which the door opening operation is performed. Then, the control unit 41 causes the video synthesizing unit 442 to generate the bird's-eye view video 100A by synthesizing the front video 101A, the rear video 102A, and either the left side video 103A or the right side video 104A that is obtained by performing, in accordance with the direction in which the door is opened, viewpoint conversion on the video corresponding to the direction in which the door opening operation is performed. In the present embodiment, the control unit 41 causes the viewpoint conversion processing unit 441 to generate the bird's-eye view video 100A by synthesizing the front video 101A, the rear video 102A, the right side video 104A, and the left side video 103A that is obtained by performing, in accordance with the direction in which the left door DL is opened, viewpoint conversion on the left side video 103 corresponding to the left side on which the door opening operation is performed. Then, the control unit 41 causes the display control unit 45 to display the generated bird's-eye view video 100A on the display panel 31.

The control unit 41 determines whether to terminate display of the bird's-eye view video (Step S15). More specifically, the control unit 41 determines whether a condition for terminating display of the bird's-eye view video is satisfied with respect to various conditions for starting displaying the bird's-eye view video at Step S11. For example, the condition may include a case in which the bird's-eye view video is displayed while the vehicle V is stopped and thereafter the vehicle V starts running or in which a predetermined time has elapsed after operation of engine or the like of the vehicle V is stopped. If the control unit 41 determines to terminate display of the bird's-eye view video (YES at Step S15), the control unit 41 terminates the process. If the control unit 41 determines not to terminate display of the bird's-eye view video (NO at Step S15), the control unit 41 returns to Step S12 and continues the processes.

In this manner, the video generation system 1 generates and displays the bird's-eye view video 100 or the bird's-eye view video 100A in accordance with the open/close state of the door.

As described above, in the present embodiment, when the left door DL and the right door DR are closed, the normal bird's-eye view video 100 is generated and displayed. In the present embodiment, when the left door DL or the right door DR is opened, the bird's-eye view video 100A is generated and displayed by synthesizing the front video 101A, the rear video 102A, and either the left side video 103A or the right side video 104A that is obtained by changing orientation of a video corresponding to the direction in which the door opening operation is performed. With this configuration, in the present embodiment, when the left door DL or the right door DR is opened, it is possible to display the bird's-eye view video 100A that is obtained by rotating a video, which corresponds to the direction in which the door opening operation is performed, in a clockwise direction along the direction in which the viewpoint conversion has been performed in accordance with the imaging direction. In this manner, in the present embodiment, it is possible to generate and display the bird's-eye view video 100 or the bird's-eye view video 100A in accordance with the open/close state of the door.

In the present embodiment, even when the imaging direction of the imaging unit 10 is deviated, due to movement of the movable part A, from a direction that is adjusted at the time of set-up, it is possible to avoid generating and displaying a bird's-eye view video in which connecting portions are discontinuous.

In this manner, according to the present embodiment, it is possible to appropriately check surroundings of the vehicle in accordance with movement of the movable part A.

### [Second Embodiment]

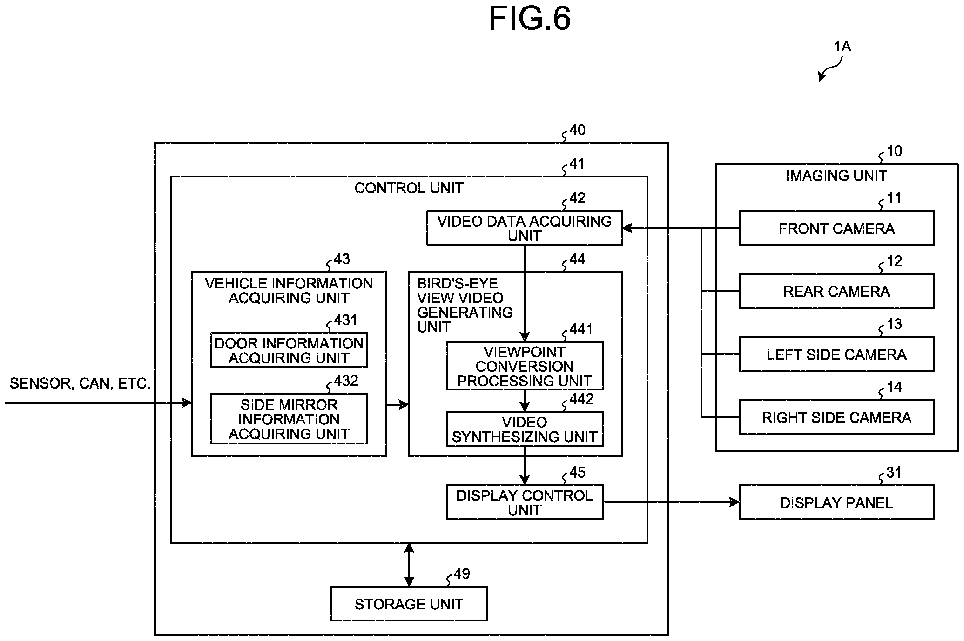

A video generation system 1A according to a second embodiment will be described with reference to FIG. 6 to FIG. 8. FIG. 6 is a block diagram illustrating the video generation system according to the second embodiment. A basic configuration of the video generation system 1A is the same as the video generation system 1 of the first embodiment. In the following description, the same components as those of the video generation system 1A are denoted by the same reference signs or corresponding signs, and detailed explanation thereof will be omitted. The video generation system 1A is different from the first embodiment in that the vehicle information acquiring unit 43 includes the door information acquiring unit 431 and a side mirror information acquiring unit 432, and the video synthesizing unit 442 of the bird's-eye view video generation device 40 performs different processes.

The side mirror information acquiring unit 432 acquires open/close information on the side mirrors as the operation information on the movable parts A. The open/close information on the side mirrors indicates whether either the left side mirror ML or the right side mirror MR is in an opened state or a closed state. The left side mirror ML and the right side mirror MR may be supporting units that are arranged on the left door DL and the right door DR and that support the left side camera 13 and the right side camera 14, respectively. In this case, the side mirror information acquiring unit 432 may be replaced with a supporting unit information acquiring unit that acquires open/close information on the supporting units as the operation information on the movable parts A.

When the door is opened and the side mirror is closed, the video synthesizing unit 442 clips the first clipping region from surroundings video data subjected to the viewpoint conversion process. Then, the video synthesizing unit 442 generates a bird's-eye view video 100B by converting the left side video 103 and the right side video 104 to a monochrome video 103B and a monochrome video 104B and synthesizing them with a front video 101B and a rear video 102B. In other words, when the door is opened and the side mirror is closed, the video synthesizing unit 442 clips the first clipping region from the surroundings video data subjected to the viewpoint conversion process. Then, the video synthesizing unit 442 generates the bird's-eye view video 100B by displaying the monochrome video 103B and the monochrome video 104B in the third frame F3 and the fourth frame F4 and synthesizing them with the front video 101B and the rear video 102B.

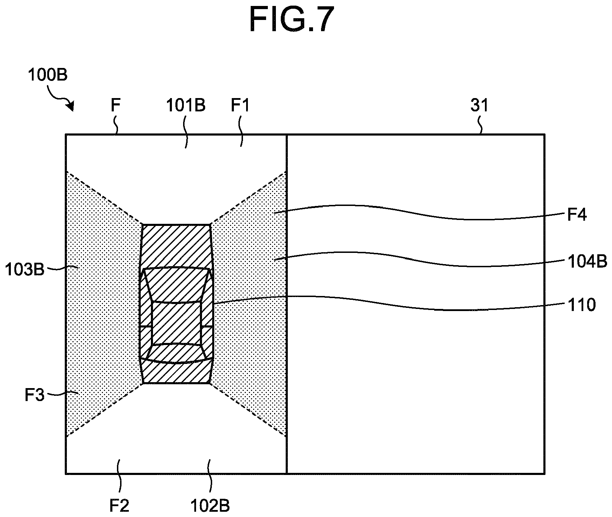

The bird's-eye view video 100B will be described with reference to FIG. 7. FIG. 7 is a diagram illustrating an example of the bird's-eye view video generated by the video generation system according to the second embodiment. The bird's-eye view video 100B contains the front video 101B and the rear video 102B that are the same as those of the normal bird's-eye view video 100, and contains the monochrome video 103B and the monochrome video 104B. In the bird's-eye view video 100B, the left side video 103 of the normal bird's-eye view video 100 is replaced with the monochrome video 103B and the right side video 104 is replaced with the monochrome video 104B.

When the door is opened and the side mirror is opened, the video synthesizing unit 442 clips the first clipping region from the surroundings video data subjected to the viewpoint conversion process. Then, the video synthesizing unit 442 generates the bird's-eye view video 100A by synthesizing the front video 101A, the rear video 102A, and either the left side video 103A or the right side video 104A that is obtained by performing, in accordance with the direction in which the door is opened, viewpoint conversion on the video corresponding to the direction in which the door opening operation is performed.

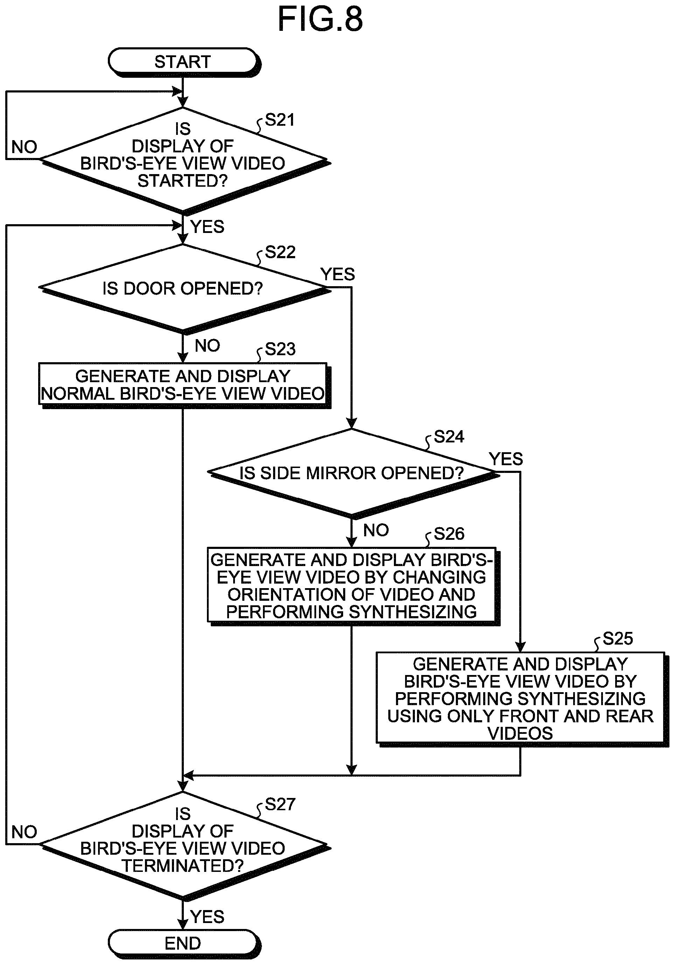

Next, the flow of processes performed by the bird's-eye view video generation device 40 of the video generation system 1A will be described. FIG. 8 is a flowchart illustrating the flow of processes performed by the bird's-eye view video generation device of the video generation system according to the second embodiment. Processes at Step S21 to Step S23, Step S26, and Step S27 in the flowchart illustrated in FIG. 8 are the same as the processes at Step S11 to Step S13, Step S14, and Step S15 in the flowchart illustrated in FIG. 5.

The control unit 41 determines whether the side mirror is opened (Step S24). More specifically, the control unit 41 determines whether the left side mirror ML or the right side mirror MR is opened based on the vehicle information acquired by the vehicle information acquiring unit 43. If the left side mirror ML or the right side mirror MR is opened (YES at Step S24), the control unit 41 proceeds to Step S25. If the left side mirror ML or the right side mirror MR is not opened (NO at Step S24), the control unit 41 proceeds to Step S26.

The control unit 41 generates and displays the bird's-eye view video 100B synthesized using only front and rear videos (Step S25). More specifically, the control unit 41 causes the video synthesizing unit 442 to generate the bird's-eye view video 100B by converting the left side video 103 and the right side video 104 to the monochrome video 103B and the monochrome video 104B and synthesizing them with the front video 101B and the rear video 102B. Then, the control unit 41 causes the display control unit 45 to display the generated bird's-eye view video 100B on the display panel 31.

In this manner, the video generation system 1A generates and displays the bird's-eye view video 100, the bird's-eye view video 100B, or the bird's-eye view video 100A in accordance with the open/close states of the door and the side mirror.

As described above, in the present embodiment, when the left door DL and the right door DR are closed, the normal bird's-eye view video 100 is generated and displayed. In the present embodiment, when the left door DL is opened or when the right door DR is opened, the bird's-eye view video 100A is generated and displayed by synthesizing the front video 101A, the rear video 102A, and either the left side video 103A or the right side video 104A that is obtained by performing, in accordance with the direction in which the door is opened, viewpoint conversion on the video corresponding to the direction in which the door opening operation is performed. In the present embodiment, when the left door DL is opened and the left side mirror ML is closed or when the right door DR is opened and the right side mirror MR is closed, the bird's-eye view video 100B is generated by converting the left side video 103 and the right side video 104 to the monochrome video 103B and the monochrome video 104B and synthesizing the front video 101B and the rear video 102B. In this manner, in the present embodiment, it is possible to generate and display the bird's-eye view video 100, the bird's-eye view video 100B, or the bird's-eye view video 100A in accordance with the open/close state of the door and the open/close state of the side mirror.

In this manner, in the present embodiment, it is possible to appropriately check surroundings of the vehicle in accordance with the open/close state of the door and the open/clos state of the side mirror.

### [Third Embodiment]

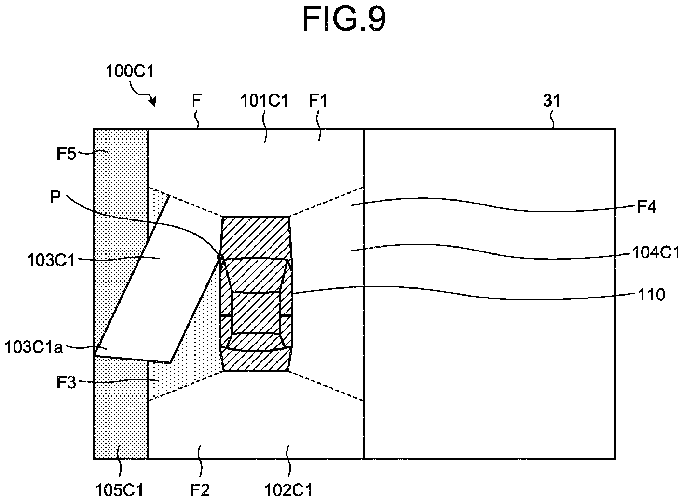

A video generation system 1 according to a third embodiment will be described with reference to FIG. 9 to FIG. 13. The video generation system 1 of the present embodiment is different from the video generation system 1 of the first embodiment in that the video synthesizing unit 442 of the bird's-eye view video generation device 40 performs different processes. When a bird's-eye view video 100C1, a bird's-eye view video 100C2, a bird's-eye view video 100C3, and a bird's-eye view video 100C4 to be described below need not be distinguished from one another, they will be referred to as a bird's-eye view video 100C that contains a front video 101C, a rear video 102C, a left side video 103C, and a right side video 104C.

The video synthesizing unit 442 generates the bird's-eye view video 100C, which has a wider display region than the normal bird's-eye view video 100, by synthesizing the front video 101C, the rear video 102C, and either the left side video 103C or the right side video 104C that is obtained by performing, in accordance with a direction in which the door is opened, viewpoint conversion on a video corresponding to a direction in which door opening operation is performed.

For example, the video synthesizing unit 442 generates the bird's-eye view video 100C1 by extending a display region as compared to the bird's-eye view video 100 so as to contain a rear end portion of the video in which orientation has been changed. In the present embodiment, the video synthesizing unit 442 generates the bird's-eye view video 100C1 by extending the display region as compared to the bird's-eye view video 100 by synthesizing a front video 101C1, a rear video 102C1, a right side video 104C1, and a left side video 103C1 that is obtained by performing viewpoint conversion on the left side video 103 in accordance with the direction in which the door is opened.

The bird's-eye view video 100C1 generated as above will be described with reference to FIG. 9. FIG. 9 is a diagram illustrating an example of the bird's-eye view video generated by the video generation system according to the third embodiment. The bird's-eye view video 100C1 contains the first frame F1 for displaying the front video 101C1, the second frame F2 for displaying the rear video 102C1, the third frame F3 for displaying the left side video 103C1, the fourth frame F4 for displaying the right side video 104C1, and a fifth frame F5 that is formed in a belt-like shape on the left side of the first frame F1, the second frame F2, and the third frame F3. The bird's-eye view video 100C1 contains the front video 101C1, the rear video 102C1, and the right side video 104C1 that are the same as those of the normal bird's-eye view video 100, and contains the left side video 103C1 and a monochrome video 105C1. The left side video 103C1 is a video that is obtained by performing viewpoint conversion on the left side video 103 in accordance with the direction in which the left door DL is opened. The left side video 103C1 contains a rear end portion 103C1a. The monochrome video 105C1 is a monochrome video that is displayed in a region in which the left side video 103C1 is not displayed within the fifth frame F5. The bird's-eye view video 100C1 generated as above has a wider display region than the normal bird's-eye view video 100.

For example, the video synthesizing unit 442 may generate a bird's-eye view video such that the area of a video subjected to the viewpoint conversion is increased. More specifically, the video synthesizing unit 442 clips a second clipping region, which is extended in a direction away from the vehicle V along a vehicle width direction, from the video corresponding to the direction in which the door opening operation is performed. Then, the video synthesizing unit 442 may generate the bird's-eye view video 100C2 by synthesizing a front video 101C2, a rear video 102C2, and either a left side video 103C2 or a right side video 104C2 that is obtained by performing viewpoint conversion in accordance with the direction in which the door is opened.

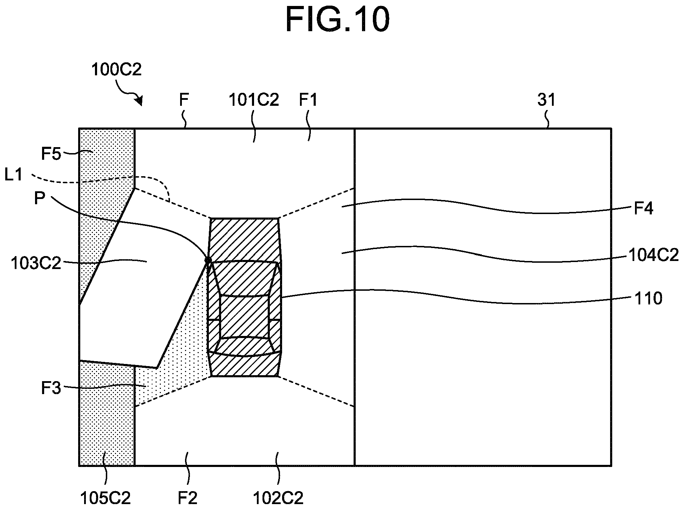

The bird's-eye view video 100C2 generated as above will be described with reference to FIG. 10. FIG. 10 is a diagram illustrating another example of the bird's-eye view video generated by the video generation system according to the third embodiment. The bird's-eye view video 100C2 contains the front video 101C2, the rear video 102C2, the right side video 104C2, a monochrome video 105C2 that are the same as those of the bird's-eye view video 100C1, and contains the left side video 103C2. The left side video 103C2 is extended as compared to the left side video 103C1 in the direction away from the vehicle along the vehicle width direction. In the present embodiment, the second clipping region of the left side video 103C2 is set in accordance with the length of a border L1 between the front video 101C2 and the left side video 103C2.

Alternatively, the video synthesizing unit 442 clips a third clipping region, which is extended in the direction away from the vehicle V along the vehicle width direction and which is extended in a rearward direction, from the video corresponding to the direction in which the door opening operation is performed. Then, the video synthesizing unit 442 may generate the bird's-eye view video 100C3 by synthesizing a front video 101C3, a rear video 102C3, and either a left side video 103C3 or a right side video 104C3 that is obtained by performing viewpoint conversion in accordance with the direction in which the door is opened.

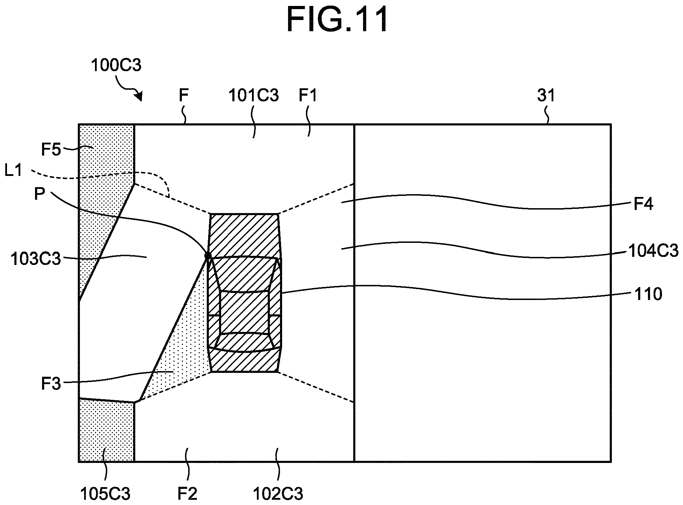

The bird's-eye view video 100C3 generated as above will be described with reference to FIG. 11. FIG. 11 is a diagram illustrating another example of the bird's-eye view video generated by the video generation system according to the third embodiment. The bird's-eye view video 100C3 contains the front video 101C3, the rear video 102C3, the right side video 104C3, and a monochrome video 105C3 that are the same as those of the bird's-eye view video 100C2, and contains the left side video 103C3. The left side video 103C3 is extended in the rearward direction as compared to the left side video 103C2.

For example, the video synthesizing unit 442 may generate a bird's-eye view video such that the area of a monochrome video contained in the generated bird's-eye view video is reduced. More specifically, the video synthesizing unit 442 may generate the bird's-eye view video 100C4 by synthesizing a front video 101C4, a left side video 103C4, a right side video 104C4, and a rear video 102C4 that is clipped using a fourth clipping region that is extended on the third frame F3 side, in other words, in a forward direction.

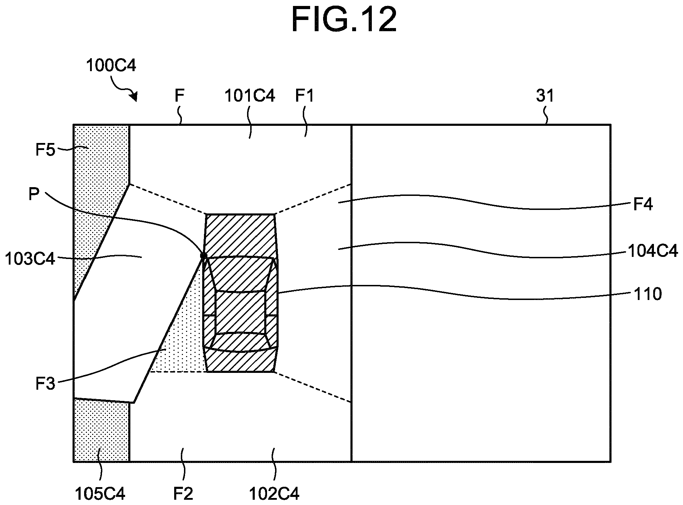

The bird's-eye view video 100C4 generated as above will be described with reference to FIG. 12. FIG. 12 is a diagram illustrating another example of the bird's-eye view video generated by the video generation system according to the third embodiment. The bird's-eye view video 100C4 contains the front video 101C4, the right side video 104C4, a monochrome video 105C4 that are the same as those of the bird's-eye view video 100C3, and contains the rear video 102C4 and the left side video 103C4. The rear video 102C4 is extended in the left forward direction as compared to the rear video 102C1. The area of the third frame F3 of the bird's-eye view video 100C4 is reduced as compared to the third frame F3 of the normal bird's-eye view video 100. It is preferable to reduce the third frame F3 up to a rear edge of the vehicle V.

Alternatively, the video synthesizing unit 442 may generate a bird's-eye view video 100C5 by synthesizing a front video 101C5, which is obtained by clipping a fifth clipping region that is extended in the direction away from the vehicle V along the vehicle width direction, a rear video 102C5, which is obtained by clipping a sixth clipping region that is extended in the direction away from the vehicle V along the vehicle width direction, a left side video 103C5, and a right side video 104C5.

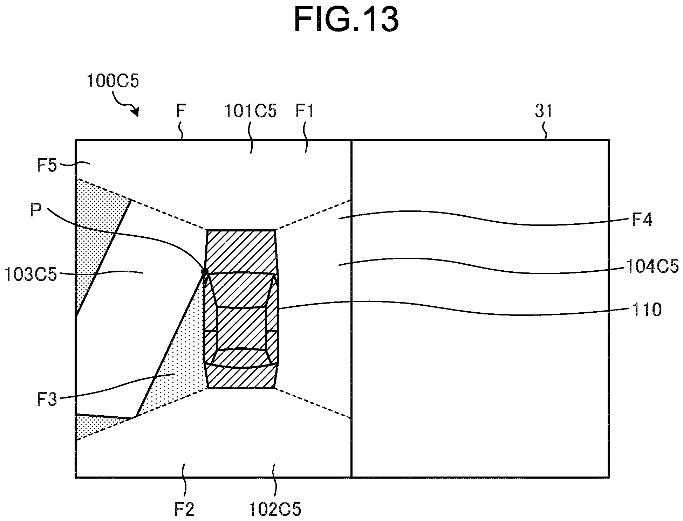

The bird's-eye view video 100C5 generated as above will be described with reference to FIG. 13. FIG. 13 is a diagram illustrating another example of the bird's-eye view video generated by the video generation system according to the third embodiment. The bird's-eye view video 100C5 contains the right side video 104C5 that is the same as that of the bird's-eye view video 100C3, and contains the front video 101C5, the rear video 102C5, and the left side video 103C5. The front video 101C5 is extended to the left side as compared to the front video 101C1. The rear video 102C5 is extended to the left side as compared to the rear video 102C1.

As described above, in the present embodiment, when the left door DL is opened or when the right door DR is opened, it is possible to generate and display the bird's-eye view video 100C, which has a wider display region than the normal bird's-eye view video 100, by synthesizing the front video 101C, the rear video 102C, and either the left side video 103C or the right side video 104C that is obtained by performing, in accordance with the direction in which the door is opened, viewpoint conversion on the video corresponding to the direction in which the door opening operation is performed. With this configuration, in the present embodiment, it is possible to extend the display region of the left side video 103C or the right side video 104C that is obtained by performing viewpoint conversion in accordance with the direction in which the door is opened, as compared to the left side video 103A or the right side video 104A. In this manner, in the present embodiment, it is possible to appropriately check surroundings of the vehicle.

### [Fourth Embodiment]

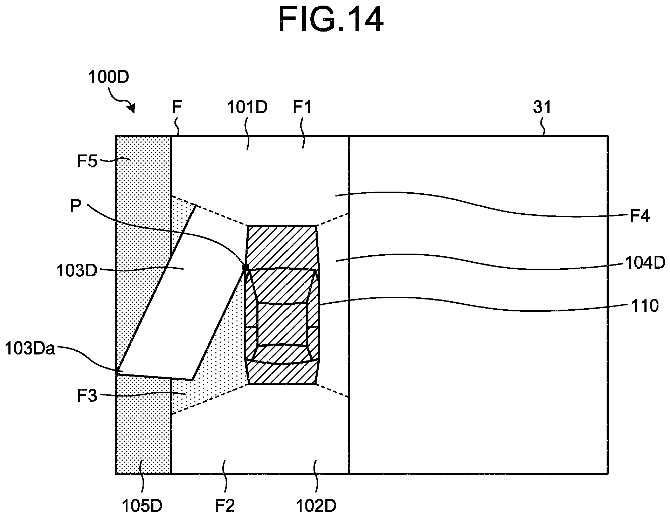

A video generation system 1 according to a fourth embodiment will be described with reference to FIG. 14. FIG. 14 is a diagram illustrating an example of a bird's-eye view video generated by the video generation system according to the fourth embodiment. The video generation system 1 of the present embodiment is different from the video generation system 1 of the first embodiment in that the video synthesizing unit 442 of the bird's-eye view video generation device 40 performs different processes.

The video synthesizing unit 442 generates a bird's-eye view video 100D by shifting the subject vehicle icon 110 in a direction different from a direction in which door opening operation is performed and synthesizing a front video 101D, a rear video 102D, and either a left side video 103D or a right side video 104D that is obtained by performing, in accordance with a direction in which the door is opened, viewpoint conversion on a video corresponding to the direction in which the door opening operation is performed. More specifically, the video synthesizing unit 442 clips, as the front video 101D, a clipping region that is shifted to the left side as compared to the front video 101. The video synthesizing unit 442 clips, as the rear video 102D, a clipping region that is shifted to the left side as compared to the rear video 102. The video synthesizing unit 442 clips, as the left side video 103D, the same clipping region as the left side video 103. The video synthesizing unit 442 clips, as the right side video 104D, a clipping region that is shifted closer to the vehicle V than the right side video 104. The video synthesizing unit 442 synthesizes the clipped videos.

The bird's-eye view video 100D generated as above will be described with reference to FIG. 14. The bird's-eye view video 100D contains the front video 101D, the rear video 102D, the left side video 103D, the right side video 104D, and a monochrome video 105D. The left side video 103D is a video that is obtained by performing viewpoint conversion on the left side video 103 in accordance with the direction in which the left door DL is opened. The left side video 103D contains a rear end portion 103Da. The area of the right side video 104D is narrower than the right side video 104. The generated bird's-eye view video 100D has the same display region as the normal bird's-eye view video 100.

As described above, in the present embodiment, when the left door DL is opened or when the right door DR is opened, it is possible to generate and display the bird's-eye view video 100D by shifting the subject vehicle icon 110 in a direction different from the direction in which the door opening operation is performed and synthesizing the front video 101D, the rear video 102D, and either the left side video 103D or the right side video 104D that is obtained by performing, in accordance with the direction in which the door is opened, viewpoint conversion on the video corresponding to the direction in which the door opening operation is performed. In this manner, in the present embodiment, it is possible to generate and display the bird's-eye view video 100D with the same display region as the normal bird's-eye view video 100.

In addition, in the present embodiment, it is possible to generate and display the bird's-eye view video 100D with the same display region as the normal bird's-eye view video 100, without reducing the display area of the video corresponding to the direction in which the door opening operation is performed. With this configuration, in the present embodiment, it is possible to avoid reduction in a display region of a video that is displayed side by side with the bird's-eye view video 100D on the display panel 31. In the present embodiment, it is possible to appropriately check surroundings of the vehicle.

### [Fifth Embodiment]

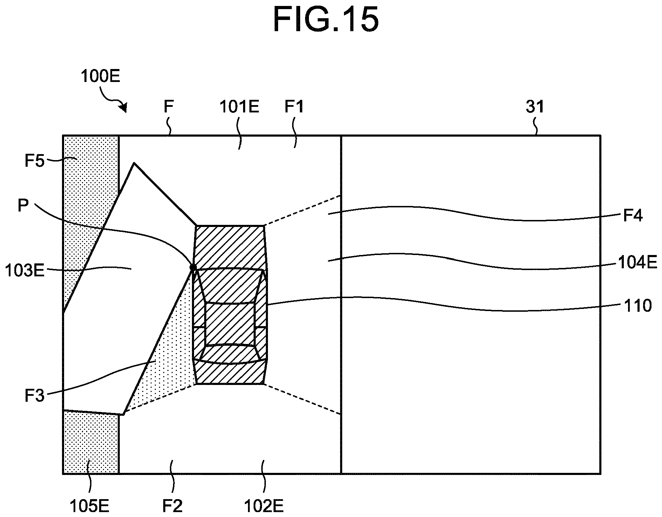

A video generation system 1 according to a fifth embodiment will be described with reference to FIG. 15. FIG. 15 is a diagram illustrating an example of a bird's-eye view video generated by the video generation system according to the fifth embodiment. The video generation system 1 of the present embodiment is different from the video generation system 1 of the first embodiment in that the video synthesizing unit 442 of the bird's-eye view video generation device 40 performs different processes.

The video synthesizing unit 442, when synthesizing a video corresponding to the direction in which the door opening operation is performed while changing orientation of the video, may synthesize the video such that the video is superimposed on top of the front video 101. Distortion in a surroundings video captured by the imaging unit 10 increases toward the periphery of the video. In contrast, distortion in videos corresponding to the front portions of the left side video 103 and the right side video 104 is small because the front portions are close to the imaging positions of the cameras. Therefore, as for a side portion on the front of the vehicle V, the left side video 103 or the right side video 104 has less distortion than the front video and allows a driver of the vehicle to easily recognize surroundings of the vehicle V.

A bird's-eye view video 100E generated as above will be described with reference to FIG. 15. The bird's-eye view video 100E contains a front video 101E, a rear video 102E, a left side video 103E, a right side video 104E, and a monochrome video 105E. The left side video 103E is a video that is obtained by performing viewpoint conversion on the left side video 103 in accordance with the direction in which the left door DL is opened. The left side video 103E is synthesized so as to be superimposed on top of the front video 101E.

As described above, in the present embodiment, when synthesizing a video corresponding to the direction in which the door opening operation is performed while changing orientation of the video, the video is synthesized so as to be superimposed on top of the front video 101E. With this configuration, according to the present embodiment, it is possible to generate the bird's-eye view video 100E with which the driver can easily recognize a side portion on the front of the vehicle V. In the present embodiment, it is possible to appropriately check surroundings of the vehicle.

### [Sixth Embodiment]

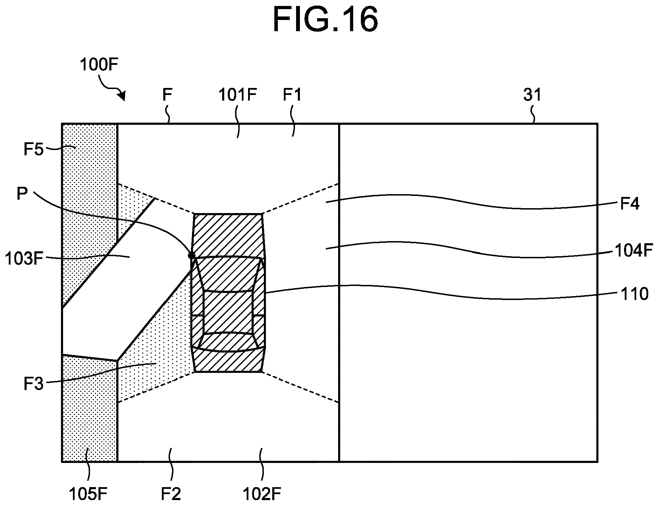

A video generation system 1 according to a sixth embodiment will be described with reference to FIG. 16. FIG. 16 is a diagram illustrating an example of a bird's-eye view video generated by the video generation system according to the sixth embodiment. The video generation system 1 of the present embodiment is different from the video generation system 1 of the first embodiment in that the vehicle information acquiring unit 43 and the video synthesizing unit 442 of the bird's-eye view video generation device 40 perform different processes.

The door information acquiring unit 431 acquires information on the amounts of movement of the movable parts A as the operation information on the movable parts A. In the present embodiment, the door information acquiring unit 431 acquires the amounts of movement (open level) of the left door DL and the right door DR as the operation information on the movable parts A. The amounts of movement (open level) of the left door DL and the right door DR acquired by the door information acquiring unit 431 are information on angles at which the doors are suspended in the opened states with the aid of cam mechanisms or the like of hinges that support the doors of the vehicle V or information on angles at which the doors are actually opened.

When the door opening operation is performed, the video synthesizing unit 442 generates a bird's-eye view video 100F by synthesizing a front video 101F, a rear video 102F, and either a left side video 103F or a right side video 104F that is obtained by performing viewpoint conversion in accordance with the open level of the door. For example, when the open level of the door is equal to or smaller than a first open level, the video synthesizing unit 442 generates the bird's-eye view video 100C1 by performing viewpoint conversion on the left side video 103 in accordance with the first open level of the door. When the open level of the door is equal to or larger than the first open level and equal to or smaller than a second open level that is larger than the first open level, the video synthesizing unit 442 generates the bird's-eye view video 100F by performing viewpoint conversion on the left side video 103 in accordance with the second open level that is larger than the first open level of the door.

Alternatively, when the door opening operation is suspended, in other words, when the open level of the door becomes constant, the video synthesizing unit 442 may generate the bird's-eye view video 100F by synthesizing the front video 101F, the rear video 102F, and either the left side video 103F or the right side video 104F that is obtained by performing viewpoint conversion in accordance with the open level of the door. The video synthesizing unit 442 may generate, while the open level of the door is being changed, the bird's-eye view video 100B in which the videos corresponding to the direction in which the door opening operation is performed are replaced with the monochrome video 103B and the monochrome video 104B.

Alternatively, when the door opening operation is performed, the video synthesizing unit 442 may generate the bird's-eye view video 100F by synthesizing the front video 101F, the rear video 102F, and either the left side video 103F or the right side video 104F that is obtained by continuously performing viewpoint conversion in accordance with the open level of the door.

As described above, in the present embodiment, it is possible to generate and display the bird's-eye view video 100C1 and the bird's-eye view video 100F that are subjected to the viewpoint conversion in accordance with the open level of the door. With this configuration, in the present embodiment, it is possible to appropriately check surroundings of the vehicle.

### [Seventh Embodiment]

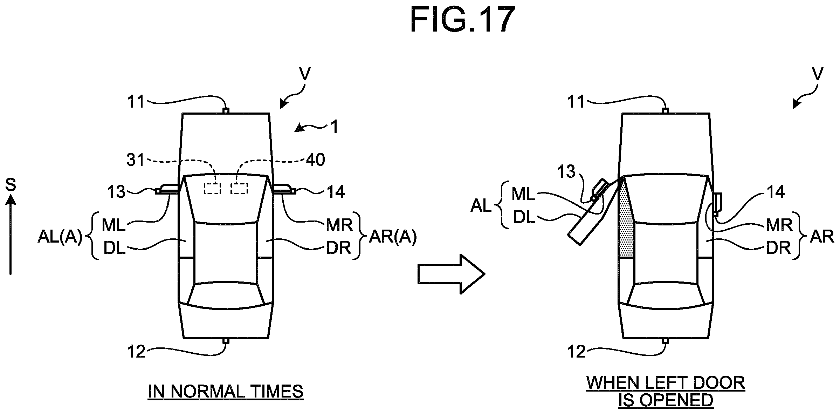

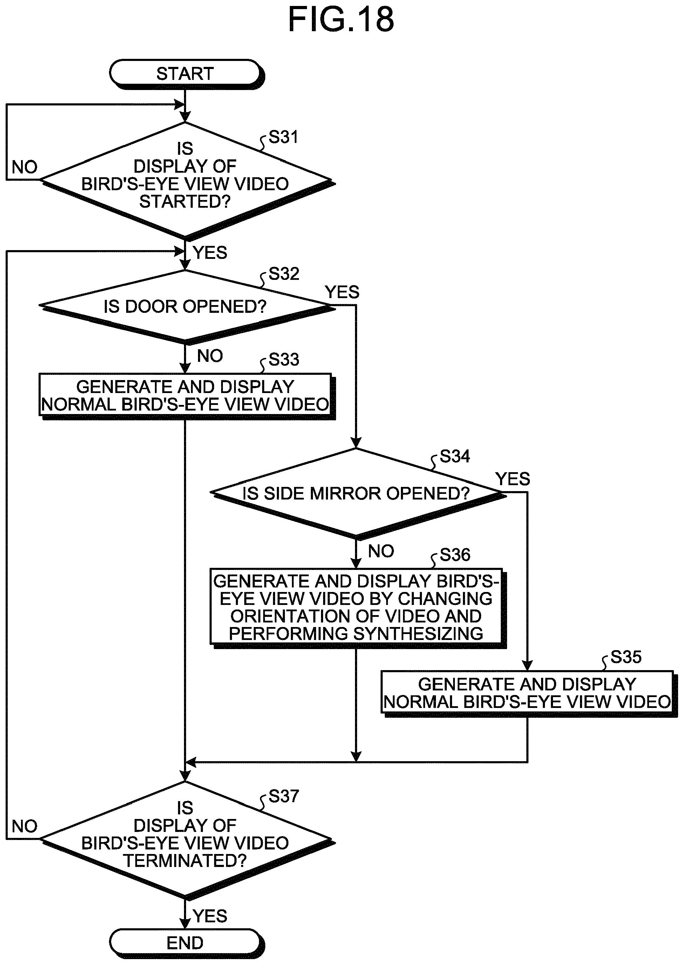

A video generation system 1 according to a seventh embodiment will be described with reference to FIG. 17 and FIG. 18. FIG. 17 is a schematic diagram illustrating a vehicle mounted with the video generation system according to the seventh embodiment. FIG. 18 is a flowchart illustrating the flow of processes performed by a bird's-eye view video generation device of the video generation system according to the seventh embodiment. The video generation system 1 of the present embodiment is different from the video generation system 1 of the first embodiment in that the video synthesizing unit 442 of the bird's-eye view video generation device 40 performs different processes.

A state in which the door is opened and the side mirror is closed will be described with reference to FIG. 17. For example, an imaging direction of the left side camera 13 does not largely change between when the left door DL is opened and the left side mirror ML is closed and when the left door DL is closed and the left side mirror ML is opened (see upper right of FIG. 1). Therefore, the video synthesizing unit 442 may generate the normal bird's-eye view video 100B when the door is opened and the side mirror is closed.

Next, the flow of processes performed by the bird's-eye view video generation device 40 of the video generation system 1 will be described. Processes at Step S31 to Step S34, Step S36, and Step S37 in the flowchart illustrated in FIG. 18 are the same as the processes at Step S21 to Step S24, Step S26, and Step S27 in the flowchart illustrated in FIG. 8.

In the processes of the flowchart illustrated in FIG. 18, the normal bird's-eye view video 100 is generated and displayed in place of the process at Step S25 in the flowchart illustrated in FIG. 8 (Step S35).

As described above, in the present embodiment, even when the door is opened and the side mirror is closed, it is possible to generate the normal bird's-eye view video 100B. With this configuration, in the present embodiment, even when it is difficult to view a lateral rear side by the side mirror, it is possible to display the normal bird's-eye view video 100B. In this manner, in the present embodiment, it is possible to more appropriately check surroundings of the vehicle.

While the video generation systems 1 according to the present invention have been described above, the present invention may embodied in various different modes other than the embodiments as described above.

The components of the video generation system 1 illustrated in the drawings are functionally conceptual and do not necessarily have to be physically configured in the manner illustrated in the drawings. In other words, specific forms of the devices are not limited to those illustrated in the drawings, and all or part of the devices may be functionally or physically distributed or integrated in arbitrary units depending on various loads or use conditions.

The configuration of the video generation system 1 is realized as software by a program or the like loaded on a memory. In the embodiments described above, it is explained that the functional blocks are implemented by cooperation with hardware or software. In other words, the functional blocks are realized in various forms using only hardware, using only software, or using a combination of hardware and software.

The components described above include one that can easily be thought of by a person skilled in the art and one that is practically identical. Further, the configurations described above may be combined appropriately. Furthermore, within the scope not departing from the gist of the present disclosure, various omission, replacement, and modifications of the components may be made.

At Step S25 in the flowchart illustrated in FIG. 5, it may be possible to convert only the video corresponding to the direction in which the door opening operation is performed to a monochrome video so that the bird's-eye view video 100B contains the video corresponding to the direction in which the door is closed.

### Reference Signs List

1 VIDEO GENERATION SYSTEM
11 FRONT CAMERA (IMAGING DEVICE)
12 REAR CAMERA (IMAGING DEVICE)
13 LEFT SIDE CAMERA (IMAGING DEVICE)
14 RIGHT SIDE CAMERA (IMAGING DEVICE)
31 DISPLAY PANEL (DISPLAY UNIT)
40 BIRD'S-EYE VIEW VIDEO GENERATION DEVICE (VIDEO GENERATION DEVICE)
41 CONTROL UNIT
42 VIDEO ACQUIRING UNIT
43 VEHICLE INFORMATION ACQUIRING UNIT (INFORMATION ACQUIRING UNIT)
44 BIRD'S-EYE VIEW VIDEO GENERATING UNIT (VIDEO GENERATING UNIT)
441 VIEWPOINT CONVERSION PROCESSING UNIT
442 VIDEO SYNTHESIZING UNIT
45 DISPLAY CONTROL UNIT
49 STORAGE UNIT
100 BIRD'S-EYE VIEW VIDEO

## Claims

1. A video generation device (1) comprising:
a video acquiring unit (42) that is arranged on a vehicle and is configured to acquire videos that are captured by a plurality of imaging devices (11,12,13,14), at least one of the imaging devices being mounted on a door of the vehicle that is movable with respect to a body of the vehicle;
an information acquiring unit (43) configured to acquire detection information indicating that movement of the door is detected;
a video generating unit (44) configured to generate a synthesized video by synthesizing the videos that are captured by the plurality of imaging devices (11,12,13,14) and are acquired by the video acquiring unit (42); and
a display control unit (45) configured to display the synthesized video generated by the video generating unit (44) on a display unit, wherein
when the information acquiring unit (43) acquires the detection information indicating an opened state of the door, the video generating unit (44) generates, as a synthesized image including a video with orientation changed in accordance with a direction in which the door is opened, a bird's eye view video (100) in which the vehicle is viewed from above by performing a viewpoint conversion process on orientation of a video that is captured by the imaging device mounted on the door in the opened state, wherein
the information acquiring unit (43) acquires detection information indicating that movement of the door detected and an open level of the door, and
the video generating unit (44), when the information acquiring unit (43) acquires the detection information indicating the opened state of the door, generates a synthesized video by changing orientation of the video that is captured by the imaging device mounted on the door in the opened state in accordance with the open level of the door.

2. The video generation device according to claim 1, wherein when the information acquiring unit (43) acquires the detection information indicating the opened state of the door, the video generating unit (44) generates a synthesized video by extending, in a direction away from the vehicle along a width direction of the vehicle, a clipping region of the video that is captured by the imaging device mounted on the door in the opened state, and changing orientation of the video in accordance with the direction in which the door is opened.

3. The video generation device according to claim 1, wherein when the information acquiring unit (43) acquires the detection information indicating the opened state of the door, the video generating unit (44) generates a synthesized video by extending, in a rearward direction of the vehicle, a clipping region of the video that is captured by the imaging device mounted on the door in the opened state, and changing orientation of the video in accordance with the direction in which the door is opened.

4. The video generation device according to claim 1, wherein when the information acquiring unit (43) acquires the detection information indicating the opened state of the door, the video generating unit (44) generates a synthesized video by shifting and positioning the vehicle in a direction different from the direction in which the door in the opened state is detected, and thereafter changing, in accordance with the direction in which the door is opened, orientation of the video that is captured by the imaging device mounted on the door in the opened state.

5. A video generation system comprising:
the video generation device according to any one of claims 1 to 5;
an imaging device (11,12,13,14) configured to capture a video of surroundings of the vehicle and supply a surroundings video to the video acquiring unit (42); and
a detecting unit configured to detect movement of the movable part and supply detection information to the information acquiring unit (43) .

6. A video generation method comprising:
a video acquiring step on a vehicle of acquiring videos that are captured by a plurality of imaging devices (11,12,13,14), at least one of the imaging devices being mounted on a door of the vehicle that is movable with respect to a body of the vehicle;
an information acquiring step of acquiring detection information indicating that movement of the door is detected;
a video generating step of generating a synthesized video by synthesizing the videos that are captured by the plurality of imaging devices (11,12,13,14) and are acquired by the video acquiring unit (42); and
a display control step of displaying the synthesized video generated by the video generating unit (44) on a display unit, wherein
when the detection information indicating an opened state of the door is acquired at the information acquiring step, the video generating step includes generating, as a synthesized image including a video with orientation changed in accordance with a direction in which the door is opened, a bird's eye view video (100) in which the vehicle is viewed from above by performing a viewpoint conversion process on orientation of a video that is captured by the imaging device mounted on the door in the opened state, wherein
the information acquiring step includes acquiring detection information indicating that movement of the door detected and an open level of the door, and
the video generating step includes, when the information acquiring unit (43) acquires the detection information indicating the opened state of the door, generating a synthesized video by changing orientation of the video that is captured by the imaging device mounted on the door in the opened state in accordance with the open level of the door.

7. A program causing a computer that functions as a video generation device to execute:
a video acquiring step on a vehicle of acquiring videos that are captured by a plurality of imaging devices (11,12,13,14), at least one of the imaging devices being mounted on a door of the vehicle that is movable with respect to a body of the vehicle;
an information acquiring step of acquiring detection information indicating that movement of the door is detected;
a video generating step of generating a synthesized video by synthesizing the videos that are captured by the plurality of imaging devices (11,12,13,14) and are acquired by the video acquiring unit (42); and
a display control step of displaying the synthesized video generated by the video generating unit (44) on a display unit, wherein
when the detection information indicating an opened state of the door is acquired at the information acquiring step, the video generating step includes generating, as a synthesized image including a video with orientation changed in accordance with a direction in which the door is opened, a bird's eye view video (100) in which the vehicle is viewed from above by performing a viewpoint conversion process on orientation of a video that is captured by the imaging device mounted on the door in the opened state, wherein
the information acquiring step includes acquiring detection information indicating that movement of the door detected and an open level of the door, and
the video generating step includes, when the information acquiring unit (43) acquires the detection information indicating the opened state of the door, generating a synthesized video by changing orientation of the video that is captured by the imaging device mounted on the door in the opened state in accordance with the open level of the door.

## Patentansprüche

1. Eine Videoerzeugungsvorrichtung (1), die Folgendes aufweist:
eine Videobeschaffungseinheit (42), die an einem Fahrzeug angeordnet und konfiguriert ist Videos zu beschaffen, die von einer Vielzahl von Abbildungsvorrichtungen (11, 12, 13, 14) aufgenommen werden, wobei mindestens eine der Abbildungsvorrichtungen an einer Tür des Fahrzeugs angebracht ist, die beweglich in Bezug auf einen Körper des Fahrzeugs ist;
eine Informationsbeschaffungseinheit (43) konfiguriert, um Detektionsinformation zu beschaffen, die anzeigt, dass eine Bewegung der Tür detektiert wird;
eine Videoerzeugungseinheit (44) konfiguriert zum Erzeugen eines synthetisierten Videos durch Synthetisieren der Videos, die durch die Vielzahl von Abbildungsvorrichtungen (11, 12, 13, 14) aufgenommen und durch die Videobeschaffungseinheit (42) beschafft wurden; und
eine Anzeigesteuereinheit (45) konfiguriert zum Anzeigen des von der Videoerzeugungseinheit (44) erzeugten synthetisierten Videos auf einer Anzeigeeinheit, wobei
wenn die Informationsbeschaffungseinheit (43) die Detektionsinformation beschafft, die einen geöffneten Zustand der Tür anzeigt, erzeugt die Videoerzeugungseinheit (44), als ein synthetisiertes Bild, das ein Video mit einer Orientierung enthält, die in Übereinstimmung mit einer Richtung geändert ist, in der die Tür geöffnet wird, ein Video (100) aus der Vogelperspektive, in dem das Fahrzeug von oben betrachtet wird, indem ein Blickpunkt-Umwandlungsprozess bezüglich einer Orientierung eines Videos durchgeführt wird, das von der Abbildungsvorrichtung aufgenommen wurde, die an der Tür im geöffneten Zustand angebracht ist, wobei
die Informationsbeschaffungseinheit (43) Detektionsinformation beschafft, die anzeigt, dass Bewegung der Tür detektiert wurde und die einen Öffnungspegel der Tür anzeigt, und
die Videoerzeugungseinheit (44), wenn die Informationsbeschaffungseinheit (43) die Detektionsinformation beschafft, die den geöffneten Zustand der Tür anzeigt, ein synthetisiertes Video erzeugt, indem sie die Orientierung des Videos ändert, das von der Abbildungsvorrichtung aufgenommen wurde, die an der Tür im geöffneten Zustand angebracht ist, in Übereinstimmung mit dem Öffnungspegel der Tür.

2. Die Videoerzeugungsvorrichtung nach Anspruch 1, wobei, wenn die Informationsbeschaffungseinheit (43) die Detektionsinformation beschafft, die den geöffneten Zustand der Tür anzeigt, die Videoerzeugungseinheit (44) ein synthetisiertes Video erzeugt durch Ausdehnen in einer Richtung weg vom Fahrzeug entlang einer Breitenrichtung des Fahrzeugs eines Ausschnitt-Bereichs des Videos, das von der Abbildungsvorrichtung aufgenommen wird, die an der Tür im geöffneten Zustand angebracht ist, und Ändern der Orientierung des Videos entsprechend der Richtung, in der die Tür geöffnet wurde.

3. Die Videoerzeugungsvorrichtung nach Anspruch 1, wobei, wenn die Informationsbeschaffungseinheit (43) die Detektionsinformation beschafft, die den geöffneten Zustand der Tür anzeigt, die Videoerzeugungseinheit (44) ein synthetisiertes Video erzeugt durch Ausdehnen in einer Rückwärtsrichtung des Fahrzeugs eines Ausschnitt -Bereichs des Videos, das von der Abbildungsvorrichtung aufgenommen wurde, die an der Tür im geöffneten Zustand angebracht ist, und Ändern der Orientierung des Videos entsprechend der Richtung, in der die Tür geöffnet wurde.

4. Die Videoerzeugungsvorrichtung nach Anspruch 1, wobei, wenn die Informationsbeschaffungseinheit (43) die Detektionsinformation beschafft, die den geöffneten Zustand der Tür anzeigt, die Videoerzeugungseinheit (44) ein synthetisiertes Video erzeugt durch Verschieben und Positionieren des Fahrzeugs in einer Richtung, die sich von der Richtung unterscheidet, in der die Tür im geöffneten Zustand detektiert wurde, und anschließendes Ändern, entsprechend der Richtung, in der die Tür geöffnet wurde, der Orientierung des Videos, das von der Abbildungsvorrichtung aufgenommen wurde, die an der Tür im geöffneten Zustand angebracht ist.

5. Ein Videoerzeugungssystem, das Folgendes aufweist:
die Videoerzeugungsvorrichtung nach einem der Ansprüche 1 bis 4;
eine Abbildungsvorrichtung (11, 12, 13, 14) konfiguriert ein Video der Umgebung des Fahrzeugs aufzunehmen und ein Umgebungsvideo an die Videobeschaffungseinheit (42) zu liefern; und
eine Detektionseinheit konfiguriert Bewegung des beweglichen Teils zu detektieren und Detektionsinformation an die Informationsbeschaffungseinheit (43) zu liefern.

6. Ein Videoerzeugungsverfahren, das Folgendes aufweist:
einen Videobeschaffungsschritt an einem Fahrzeug zum Beschaffen von Videos, die durch eine Vielzahl von Abbildungsvorrichtungen (11, 12, 13, 14) aufgenommen werden, wobei mindestens eine der Abbildungsvorrichtungen an einer Tür des Fahrzeugs angebracht ist, die beweglich in Bezug auf einen Körper des Fahrzeugs ist;
einen Informationsbeschaffungsschritt zum Beschaffen von Detektionsinformation, die anzeigt, dass eine Bewegung der Tür detektiert wird;
einen Videoerzeugungsschritt zum Erzeugen eines synthetisierten Videos durch Synthetisieren der Videos, die durch die Vielzahl von Abbildungsvorrichtungen (11, 12, 13, 14) aufgenommen und durch die Videobeschaffungseinheit (42) beschafft werden; und
einen Anzeigesteuerungsschritt zum Anzeigen des von der Videoerzeugungseinheit (44) erzeugten synthetisierten Videos auf einer Anzeigeeinheit, wobei
wenn die Detektionsinformation, die einen geöffneten Zustand der Tür anzeigt, bei dem Informationsbeschaffungsschritt beschafft wird, dann beinhaltet der Videoerzeugungsschritt Erzeugen, als ein synthetisiertes Bild, das ein Video mit einer Orientierung enthält, die in Übereinstimmung mit einer Richtung geändert ist, in der die Tür geöffnet wurde, eines Videos (100) aus der Vogelperspektive, in dem das Fahrzeug von oben betrachtet wird, indem ein Blickpunkt-Umwandlungsprozess bezüglich der Orientierung eines Videos durchgeführt wird, das von der Abbildungsvorrichtung aufgenommen wurde, die an der Tür im geöffneten Zustand angebracht ist, wobei
der Informationsbeschaffungsschritt Beschaffen von Detektionsinformation beinhaltet, die anzeigt, dass Bewegung der Tür detektiert wurde und die einen Öffnungspegel der Tür anzeigt, und
wenn die Informationsbeschaffungseinheit (43) die Detektionsinformation beschafft, die den geöffneten Zustand der Tür anzeigt, beinhaltet der Videoerzeugungsschritt Erzeugen eines synthetisierten Videos durch Ändern der Orientierung des Videos, das von der Abbildungsvorrichtung aufgenommen wurde, die an der Tür im geöffneten Zustand angebracht ist, in Übereinstimmung mit dem Öffnungspegel der Tür.

7. Ein Programm, das einen Computer veranlasst, der als Videoerzeugungsvorrichtung fungiert, Folgendes auszuführen:
einen Videobeschaffungsschritt an einem Fahrzeug zum Beschaffen von Videos, die durch eine Vielzahl von Abbildungsvorrichtungen (11, 12, 13, 14) aufgenommen werden, wobei mindestens eine der Abbildungsvorrichtungen an einer Tür des Fahrzeugs angebracht ist, die beweglich in Bezug auf einen Körper des Fahrzeugs ist;
einen Informationsbeschaffungsschritt zum Beschaffen von Detektionsinformation, die anzeigt, dass eine Bewegung der Tür detektiert wird;
einen Videoerzeugungsschritt zum Erzeugen eines synthetisierten Videos durch Synthetisieren der Videos, die durch die Vielzahl von Abbildungsvorrichtungen (11, 12, 13, 14) aufgenommen und durch die Videobeschaffungseinheit (42) beschafft wurden; und
einen Anzeigesteuerungsschritt zum Anzeigen des von der Videoerzeugungseinheit (44) erzeugten synthetisierten Videos auf einer Anzeigeeinheit, wobei
wenn die Detektionsinformation, die einen geöffneten Zustand der Tür anzeigt, bei dem Informationsbeschaffungsschritt beschafft wird, dann beinhaltet der Videoerzeugungsschritt Erzeugen, als ein synthetisiertes Bild, das ein Video mit einer Orientierung enthält, die in Übereinstimmung mit einer Richtung geändert ist, in der die Tür geöffnet wird, eines Videos (100) aus der Vogelperspektive, in dem das Fahrzeug von oben betrachtet wird, indem ein Blickpunkt-Umwandlungsprozess bezüglich der Orientierung eines Videos durchgeführt wird, das von der Abbildungsvorrichtung aufgenommen wurde, die an der Tür im geöffneten Zustand angebracht ist, wobei
der Informationsbeschaffungsschritt Beschaffen von Detektionsinformation beinhaltet, die anzeigt, dass Bewegung der Tür detektiert wurde und die einen Öffnungspegel der Tür anzeigt, und
wenn die Informationsbeschaffungseinheit (43) die Detektionsinformation beschafft, die den geöffneten Zustand der Tür anzeigt, beinhaltet der Videoerzeugungsschritt Erzeugen eines synthetisierten Videos durch Ändern der Orientierung des Videos, das von der Abbildungsvorrichtung aufgenommen wurde, die an der Tür im geöffneten Zustand angebracht ist, in Übereinstimmung mit dem Öffnungspegel der Tür.

## Revendications

1. Dispositif de génération de vidéo (1) comprenant :
une unité d'acquisition de vidéo (42) qui est agencée sur un véhicule et qui est configurée pour acquérir des vidéos qui sont capturées par une pluralité de dispositifs d'imagerie (11, 12, 13, 14), au moins un des dispositifs d'imagerie étant monté sur une porte du véhicule qui est mobile par rapport à un corps du véhicule ;
une unité d'acquisition d'informations (43) configurée pour acquérir des informations de détection indiquant qu'un mouvement de la porte est détecté ;
une unité de génération de vidéo (44) configurée pour générer une vidéo synthétisée en synthétisant les vidéos qui sont capturées par la pluralité de dispositifs d'imagerie (11, 12, 13, 14) et qui sont acquises par l'unité d'acquisition de vidéo (42) ; et
une unité de commande d'affichage (45) configurée pour afficher la vidéo synthétisée générée par l'unité de génération de vidéo (44) sur une unité d'affichage, dans lequel
quand l'unité d'acquisition d'informations (43) acquiert les informations de détection indiquant un état ouvert de la porte, l'unité de génération de vidéo (44) génère, en tant qu'image synthétisée comportant une vidéo ayant une orientation modifiée conformément à une direction dans laquelle la porte est ouverte, une vue à vol d'oiseau (100) dans laquelle le véhicule est vu de dessus en exécutant un traitement de conversion de point de vue sur une orientation d'une vidéo qui est capturée par le dispositif d'imagerie monté sur la porte à l'état ouvert, dans lequel
l'unité d'acquisition d'informations (43) acquiert des informations de détection indiquant qu'un mouvement de la porte est détecté et un niveau d'ouverture de la porte, et
l'unité de génération de vidéo (44), quand l'unité d'acquisition d'informations (43) acquiert des informations de détection indiquant l'état d'ouverture de la porte, génère une vidéo synthétisée en modifiant l'orientation de la vidéo qui est capturée par le dispositif d'imagerie monté sur la porte à l'état ouvert conformément au niveau d'ouverture de la porte.

2. Dispositif de génération de vidéo selon la revendication 1, dans lequel, quand l'unité d'acquisition d'informations (43) acquiert des informations de détection indiquant l'état ouvert de la porte, l'unité de génération de vidéo (44) génère une vidéo synthétisée en étendant, dans une direction s'éloignant du véhicule le long d'une direction de largeur du véhicule, une région d'écrêtage de la vidéo qui est capturée par le dispositif d'imagerie monté sur la porte à l'état ouvert, et en modifiant l'orientation de la vidéo conformément à la direction dans laquelle la porte est ouverte.

3. Dispositif de génération de vidéo selon la revendication 1, dans lequel, quand l'unité d'acquisition d'informations (43) acquiert les informations de détection indiquant l'état ouvert de la porte, l'unité de génération de vidéo (44) génère une vidéo synthétisée en étendant, dans une direction orientée vers l'arrière du véhicule, une région d'écrêtage de la vidéo qui est capturée par le dispositif d'imagerie monté sur la porte à l'état ouvert, et en modifiant l'orientation de la vidéo conformément à la direction dans laquelle la porte est ouverte.

4. Dispositif de génération de vidéo selon la revendication 1, dans lequel, quand l'unité d'acquisition d'informations (43) acquiert les informations de détection indiquant l'état ouvert de la porte, l'unité de génération de vidéo (44) génère une vidéo synthétisée en décalant et plaçant le véhicule dans une direction différente de la direction dans laquelle la porte à l'état ouvert est détectée, puis en modifiant, conformément à la direction dans laquelle la porte est ouverte, l'orientation de la vidéo qui est capturée par le dispositif d'imagerie monté sur la porte à l'état ouvert.

5. Système de génération de vidéo comprenant :
le dispositif de génération de vidéo selon l'une quelconque des revendications 1 à 4 ;
un dispositif d'imagerie (11, 12, 13, 14) configuré pour capturer une vidéo de l'environnement du véhicule et pour fournir une vidéo de l'environnement à l'unité d'acquisition de vidéo (42) ; et
une unité de détection configurée pour détecter un mouvement de la partie mobile et pour fournir des informations de détection à l'unité d'acquisition d'informations (43).

6. Procédé génération de vidéo comprenant :
une étape d'acquisition de vidéo sur un véhicule d'acquisition de vidéos qui sont capturées par une pluralité de dispositifs d'imagerie (11, 12, 13, 14), au moins un des dispositifs d'imagerie étant monté sur une porte du véhicule qui est mobile par rapport à un corps du véhicule ;
une étape d'acquisition d'informations d'acquisition d'informations de détection indiquant qu'un mouvement de la porte est détecté ;
une étape de génération de vidéo de génération d'une vidéo synthétisée en synthétisant les vidéos qui sont capturées par la pluralité de dispositifs d'imagerie (11, 12, 13, 14) et qui sont acquises par l'unité d'acquisition de vidéo (42) ; et
une étape de commande d'affichage d'affichage de la vidéo synthétisée générée par l'unité de génération de vidéo (44) sur une unité d'affichage, dans lequel
quand les informations de détection indiquant un état ouvert de la porte sont acquises à l'étape d'acquisition d'informations, l'étape de génération de vidéo comporte la génération, en tant qu'image synthétisée comportant une vidéo ayant une orientation modifiée conformément à une direction dans laquelle la porte est ouverte, d'une vue à vol d'oiseau (100) dans laquelle le véhicule est vu de dessus en exécutant un traitement de conversion de point de vue sur l'orientation d'une vidéo qui est capturée par le dispositif d'imagerie monté sur la porte à l'état ouvert, dans lequel
l'étape d'acquisition d'informations comporte l'acquisition d'informations de détection indiquant qu'un mouvement de la porte est détecté et un niveau d'ouverture de la porte, et
l'étape de génération de vidéo comporte, quand l'unité d'acquisition d'informations (43) acquiert les informations de détection indiquant l'état ouvert de la porte, la génération d'une vidéo synthétisée en modifiant l'orientation de la vidéo qui est capturée par le dispositif d'imagerie monté sur la porte à l'état ouvert conformément au niveau d'ouverture de la porte.

7. Programme amenant un ordinateur qui fonctionne en tant que dispositif de génération de vidéo à exécuter :
une étape d'acquisition de vidéo sur un véhicule d'acquisition de vidéos qui sont capturées par une pluralité de dispositifs d'imagerie (11, 12, 13, 14), au moins un des dispositifs d'imagerie étant monté sur une porte du véhicule qui est mobile par rapport à un corps du véhicule ;
une étape d'acquisition d'informations d'acquisition d'informations de détection indiquant qu'un mouvement de la porte est détecté ;
une étape de génération de vidéo de génération d'une vidéo synthétisée en synthétisant les vidéos qui sont capturées par la pluralité de dispositifs d'imagerie (11, 12, 13, 14) et qui sont acquises par l'unité d'acquisition de vidéo (42) ; et
une étape de commande d'affichage d'affichage de la vidéo synthétisée générée par l'unité de génération de vidéo (44) sur une unité d'affichage, dans lequel
quand les informations de détection indiquant un état ouvert de la porte sont acquises à l'étape d'acquisition d'informations, l'étape de génération de vidéo comporte la génération, en tant qu'image synthétisée comportant une vidéo ayant une orientation modifiée conformément à une direction dans laquelle la porte est ouverte, d'une vue à vol d'oiseau (100) dans laquelle le véhicule est vu de dessus en exécutant un traitement de conversion de point de vue sur l'orientation d'une vidéo qui est capturée par le dispositif d'imagerie monté sur la porte à l'état ouvert, dans lequel
l'étape d'acquisition d'informations comporte l'acquisition d'informations de détection indiquant qu'un mouvement de la porte est détecté et un niveau d'ouverture de la porte, et
l'étape de génération de vidéo comporte, quand l'unité d'acquisition d'informations (43) acquiert les informations de détection indiquant l'état ouvert de la porte, la génération d'une vidéo synthétisée en modifiant l'orientation de la vidéo qui est capturée par le dispositif d'imagerie monté sur la porte à l'état ouvert conformément au niveau d'ouverture de la porte.
